# FASCICULE DE BREVET EUROPEEN

(11) **EP 1 009 625 B1**
(45) Date de publication et mention de la délivrance du brevet: **26.02.2003**
(21) Numéro de dépôt: 98914944.8
(22) Date de dépôt: 18.03.1998
(51) Int. Cl.: B29D 24/00, B29C 47/12

(54) **PROCEDE DE FABRICATION D'UNE STRUCTURE ALVEOLAIRE EN MATIERE THERMOFUSIBLE, ET DISPOSITIF POUR LA MISE EN OEUVRE DE CE PROCEDE**
VERFAHREN ZUM HERSTELLEN EINER WABENFÖRMIGEN STRUKTUR AUS THERMOPLASTISCHEM KUNSTSTOFF UND VORRICHTUNG ZUR DURCHFÜHRUNG DES VERFAHRENS
METHOD FOR PRODUCING A HONEYCOMB CORE IN THERMOFUSIBLE MATERIAL, AND DEVICE FOR IMPLEMENTING SAME

(30) Priorité: 19.03.1997 FR 9703572
(43) Date de publication de la demande: 21.06.2000
(73) Titulaire: Ducruy, Guy, 38760 Varces (FR)
(72) Inventeur: Ducruy, Guy, 38760 Varces (FR)
(74) Mandataire: Maureau, Philippe
(86) Numéro de dépôt international: FR9800546
(87) Numéro de publication internationale: WO98041388

(56) Documents cités:
- WO-A-87/00119
- DE-A- 1 779 330
- DE-A- 4 208 812
- JP-B- 42 024 092
- US-A- 3 932 106

## Description

La présente invention a pour objet un procédé de fabrication d'une structure alvéolaire en matière thermofusible, telle qu'en matière thermoplastique, ou en caoutchouc, et un dispositif pour la mise en oeuvre de ce procédé.

La structure alvéolaire obtenue selon le procédé de l'invention permet d'obtenir, par exemple, des plaques dans lesquelles les alvéoles sont perpendiculaires au plan de la plaque, ces plaques étant de structure alvéolaire simple, ou de structure sandwich avec une âme alvéolaire.

Il est déjà connu de réaliser des structures alvéolaires en matière thermofusible, qui sont essentiellement obtenues par quatre procédés.

Le premier procédé consiste à coller des films les uns sur les autres à l'aide de bandes de colle décalées, puis à réaliser un étirage pour obtenir une structure alvéolaire. Il s'agit d'une technique de fabrication en discontinu, qui est très onéreuse de mise en oeuvre.

Un second procédé consiste à réaliser le thermoformage d'une feuille de matière thermoplastique. Il s'agit d'une technique de fabrication en discontinu, avec une dépouille obligatoire des alvéoles et une très forte limitation de l'épaisseur de la structure obtenue.

Un autre procédé consiste à réaliser l'injection de la structure à l'intérieur d'un moule complexe. Il s'agit, dans ce cas encore, d'une technique discontinue, avec une limitation de la taille des pièces produites.

Un quatrième procédé consiste à extruder un profilé de matière thermoplastique plus ou moins complexe, comportant des découpes ménageant des alvéoles. Les alvéoles sont donc orientées longitudinalement au sens d'extrusion. Il convient, après extrusion, de découper le profilé en tranches, de réorienter ces tranches à 90° par rapport à l'axe d'extrusion, et de fixer les tranches les unes aux autres, soit par collage, soit par thermofusion, avec ou sans matériau ajouté, tel que matériau tissé, aiguilleté, feuille de matière thermoplastique, pour réaliser la formation d'un panneau.

Cette technique est donc complexe de mise en oeuvre, car nécessitant des opérations de reprise pour aboutir à un produit final constitué par un panneau.

Les structures alvéolaires, telles qu'elles viennent d'être définies, possèdent de très bonnes qualités intrinsèques résultant, d'une part, de la structure alvéolaire et, d'autre part, de la nature du matériau thermofusible. Ces qualités sont notamment la résistance mécanique à la compression, un faible poids, une recyclabilité, une thermoformabilité, un coefficient d'isolation thermique intéressant, leur caractère imputrescible ainsi que la perméabilité à la plupart des rayonnements. Ces structures trouvent donc des applications dans de nombreuses industries : automobile, navale, aéronautique, ferroviaire ainsi que dans le bâtiment et les travaux publics, permettant la réalisation de structures sandwich remplaçant avantageusement des mousses alvéolaires et des élastomères de type caoutchouc de conception classique.

Le document DE 17 79 330 décrit un procédé de fabrication d'un filet tubulaire réticulé constituant une structure alvéolaire en matériau thermofusible, dans laquelle les alvéoles sont perpendiculaires à la direction d'extrusion. La structure alvéolaire est obtenue en alternant, dans chaque compartiment délimité par les différents cordons parallèles de matière thermoplastique et avec les parois d'une chambre de conformation, et à partir de l'extrémité située du côté de la filière, une mise en dépression et le remplissage à l'aide d'air chaud.

Le but de l'invention est de fournir un procédé et un dispositif de fabrication d'une telle structure alvéolaire, permettant une fabrication en continu d'une structure sous forme de panneau, sans nécessiter aucune reprise, ce panneau pouvant être constitué par une structure sandwich à âme alvéolaire. Un autre but de l'invention est de permettre un réglage aisé de l'épaisseur de la structure obtenue, en cours de réalisation, ainsi que de la densité de cette structure, avec la possibilité de faire varier la forme des alvéoles en cours d'obtention de la structure.

A cet effet, le procédé qu'elle concerne, consiste :
- à extruder en continu, à l'aide d'une filière à plusieurs fentes, des feuilles parallèles de matière thermofusible à l'intérieur d'une chambre de refroidissement, avec réalisation d'une étanchéité entre les bords longitudinaux des feuilles et les parois de la chambre , les différentes feuilles délimitant entre elles et avec les parois de la chambre des compartiments,
- à réaliser, dans cette chambre et à partir de l'extrémité située du côté de la filière, une dépression dans un compartiment sur deux, afin de déformer et d'attirer deux à deux les feuilles extrudées pour réaliser un soudage localisé sur toute leur hauteur,
- à remplir, à partir de l'extrémité située du côté de la filière, un compartiment sur deux, alternés avec les compartiments précédents, à l'aide d'un fluide de refroidissement, et
- à alterner, dans chaque compartiment, la mise en dépression et le remplissage à l'aide d'un fluide de refroidissement, pour obtenir une structure alvéolaire solidifiée dans la chambre de refroidissement dans laquelle les alvéoles sont perpendiculaires à la direction d'extrusion.

Cette technique est très intéressante, dans la mesure où la structure sort en continu, directement de la filière d'extrusion, avec des alvéoles qui sont perpendiculaires à l'axe d'extrusion. II est donc possible de sortir de la filière des structures alvéolaires de très grandes dimensions, par exemple sous forme de panneaux, qui sont obtenus directement sans reprise.

La mise en dépression des compartiments délimités par deux feuilles assure leur rapprochement et leur soudage sur toute leur hauteur. L'alimentation en fluide de refroidissement, thermiquement régulé, des compartiments voisins permet, juste après la soudure, d'assurer la solidification de la structure, dans la chambre de refroidissement.

Un avantage par rapport à la technologie des films collés ou soudés, est que, selon l'invention, la partie soudée des feuilles peut être sensiblement de la même épaisseur que la partie non soudée, ce qui aboutit à un gain de la densité de la structure, la légéreté étant un critère important. A cet effet, le procédé selon l'invention consiste à exercer sur la structure sortant de la chambre de refroidissement une traction saccadée, afin de diminuer l'épaisseur des feuilles dans les zones de celles-ci devant être soudées les unes sur les autres

Il est possible de faire varier la forme des alvéoles, qui peuvent se présenter sous forme de polygones réguliers ou non, sous forme elliptique, circulaire, ovale, avec la même filière, en cours de fonctionnement, en jouant sur différents paramètres, tels que la vitesse d'extrusion, ainsi que les cycles d'alternance dépression-alimentation en fluide de refroidissement appliqués entre deux feuilles voisines.

Un dispositif pour la mise en oeuvre de ce procédé comprend une extrudeuse amenant la matière thermofusible à l'état visqueux à une filière porte-manteau comportant plusieurs fentes parallèles destinées chacune à la formation en continu d'une feuille, chaque fente étant délimitée par deux pièces en forme de cônes, réalisées en matériau isolant thermique, et dans chacune desquelles est ménagée une rainure susceptible d'être reliée successivement à une source de dépression et à une source de fluide de refroidissement, ce dispositif comprenant également une chambre de refroidissement tubulaire, de section rectangulaire, de hauteur égale à la hauteur de la structure à obtenir, dans le sens des alvéoles de celle-ci, et de largeur égale à celle de la structure, un réservoir de fluide de refroidissement à partir duquel le fluide est prélevé à l'aide d'une pompe, une pompe à dépression, et un distributeur qui, associé à ces deux pompes ainsi qu'à un réseau le reliant aux différents compartiments situés des deux côtés des feuilles, est destiné à relier successivement chaque compartiment avec la source de dépression et avec la source de fluide de refroidissement.

De toute façon, l'invention sera bien comprise à l'aide de la description qui suit, en référence au dessin schématique annexé représentant, à titre d'exemple non limitatif, une forme d'exécution d'un dispositif pour la mise en oeuvre de ce procédé de fabrication d'une structure alvéolaire en matière thermofusible :
Figure 1 est une vue générale de l'installation ;
Figure 2 est une vue en coupe et à échelle agrandie selon la ligne II-II de figure 1 ;
Figure 3 est une vue en perspective éclatée de la filière et de l'ensemble de sortie assurant la conformation de la structure alvéolaire ;
Figure 4 est une vue en perspective d'une variante de l'ensemble de sortie assurant la conformation de la structure alvéolaire ;
Figures 5 et 6 sont deux vues du distributeur assurant simultanément la mise en dépression et l'alimentation en fluide de refroidissement des différents compartiments situés de chaque côté des feuilles ;
Figures 7 et 8 sont deux vues en perspective de deux types de structure alvéolaire susceptibles d'être obtenus suivant le procédé selon l'invention.

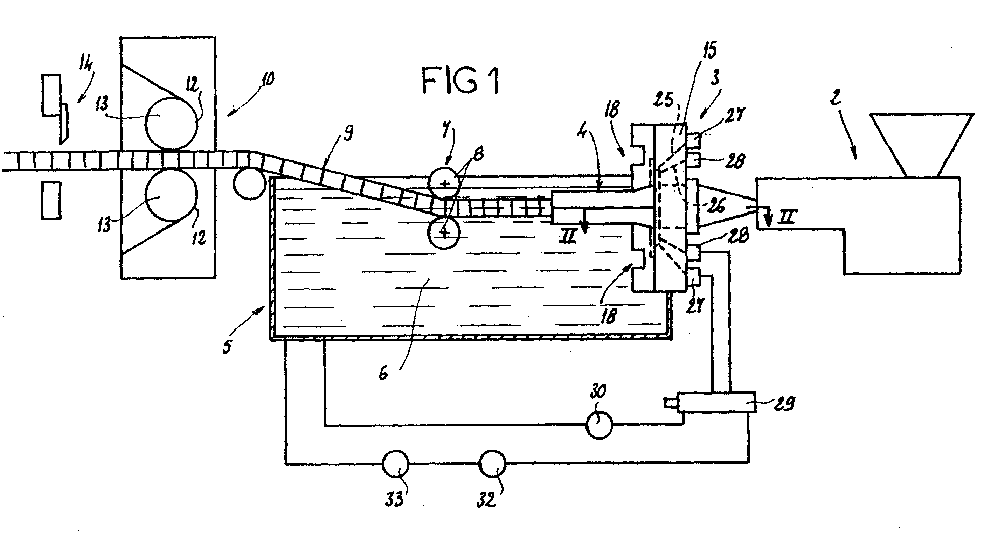

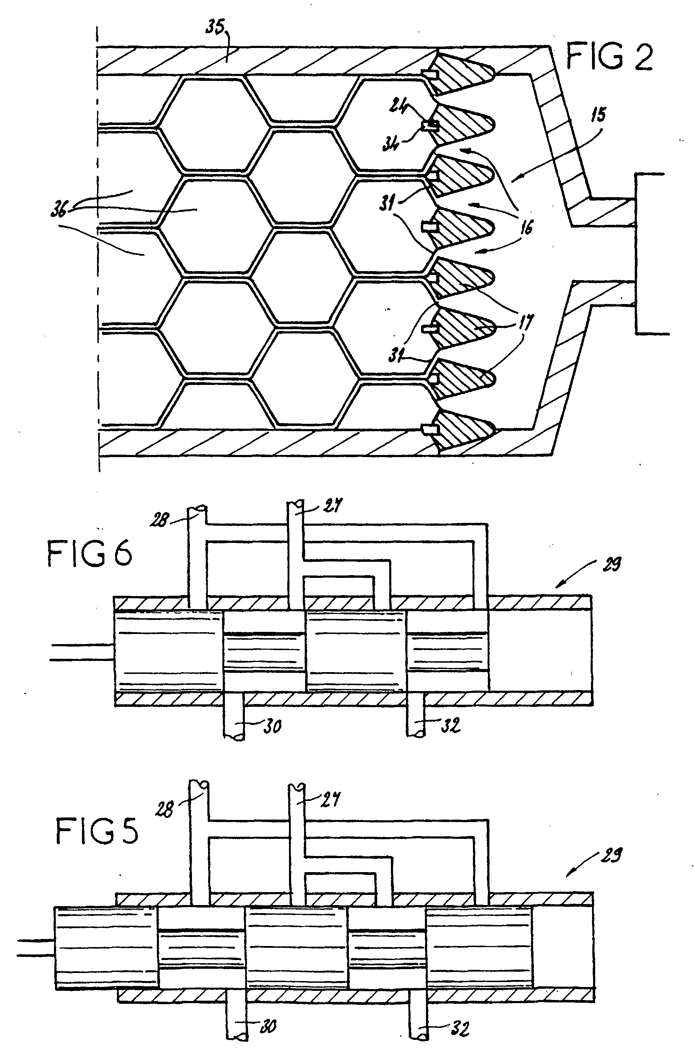

La figure 1 représente une installation comprenant un dispositif d'extrusion 2 permettant d'amener une matière thermofusible, telle qu'une matière thermoplastique du type polypropylène ou élastomère de caoutchouc à un état pâteux sous pression, en la répartissant sur une grande largeur par exemple au moyen d'une filière porte-manteau 3. Il va de soi que la largeur de la filière, telle que représentée au dessin et notamment à la figure 2, est restreinte, et sert simplement à illustrer le procédé selon l'invention, le nombre d'alvéoles obtenu pouvant être beaucoup plus important sur une même largeur.

En aval de la filière 3 est disposée une chambre 4 de conformation et de refroidissement de la structure alvéolaire, qui est pressurisée. Dans la forme d'exécution représentée, cette chambre est au moins partiellement immergée dans un bac 5 contenant de l'eau 6. A la sortie de la chambre 4 est disposé un train de traction 7 constitué par deux rouleaux 8 entraînés en sens inverse l'un de l'autre et prenant appui sur les deux faces de la structure alvéolaire 9. En aval du bac 5 est disposé un dispositif 10 de soudage en continu de deux feuilles de revêtement 12 dévidées à partir de deux bobines 13, afin de former des peaux sur les deux faces de la structure alvéolaire 9. Enfin, en aval du dispositif 10 est installé un dispositif de coupe 14, assurant la découpe de la structure alvéolaire transversalement à la direction d'extrusion afin de former des plaques.

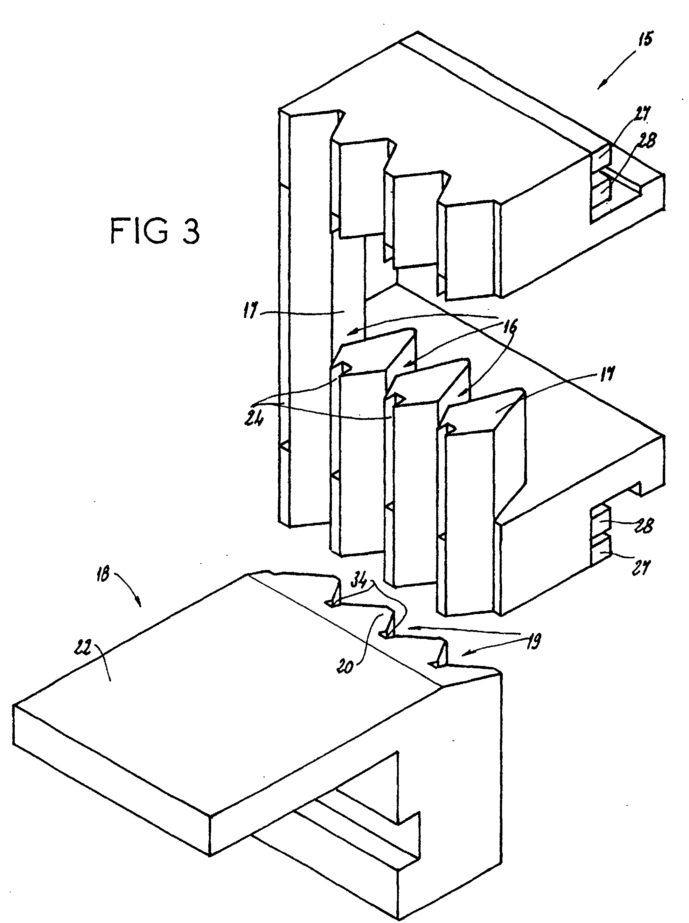

La filière 3 comprend un bloc 15 représenté plus en détail aux figures 2 et 3. Dans la partie centrale de ce bloc 15, dans laquelle est amenée la matière à un état visqueux, sont ménagées des fentes verticales 16 parallèles, délimitées chacune par deux pièces voisines 17 en forme de cône, dont le sommet est tourné vers l'amont. Ces pièces 17 sont réalisées en matériau isolant thermique, à bonne caractéristique mécanique, tel qu'un polyimide, recouvert dans la zone précédant les fentes d'un matériau caloporteur, par exemple à base d'or, d'argent ou de cuivre. II serait possible d'associer éventuellement à ce dispositif caloporteur, ou d'associer à chaque pièce 17 en forme de cône, des moyens de chauffage. Cela permet d'apporter très rapidement des calories récupérées en amont dans le matériau thermofusible, jusqu'au point de mise en forme de celui-ci afin de raccourcir le gradient thermique par rapport à la zone de refroidissement et de permettre à ce matériau thermofusible de ne pas avoir atteint sa température de solidification avant mise en forme. Compte tenu du fait que les fentes 16 sont parallèles, ces fentes vont permettre la formation de feuilles 31 parallèles. Il est à noter que l'écartement entre deux fentes voisines 16 correspond à la moitié de la largeur des alvéoles de la structure alvéolaire qui sera formée. La conformation de la structure alvéolaire est assurée par l'intermédiaire de deux ensembles de conformation de sortie 18, comportant des parties coniques 19 complémentaires de celles 17 de la filière, de manière à permettre l'imbrication de ces dernières et à assurer l'étanchéité au circuit hydraulique, quelle que soit la position verticale des parties 18 par rapport à la filière. En effet, chaque partie 18 est montée réglable verticalement sur la filière 3, c'est-à-dire dans le sens des alvéoles de la structure devant être formée, afin de permettre le réglage de l'épaisseur de la structure. Les deux ensembles 18 délimitent, par leurs surfaces en regard 20, 22, les zones d'appui des deux faces de la structure alvéolaire perpendiculaire aux alvéoles.

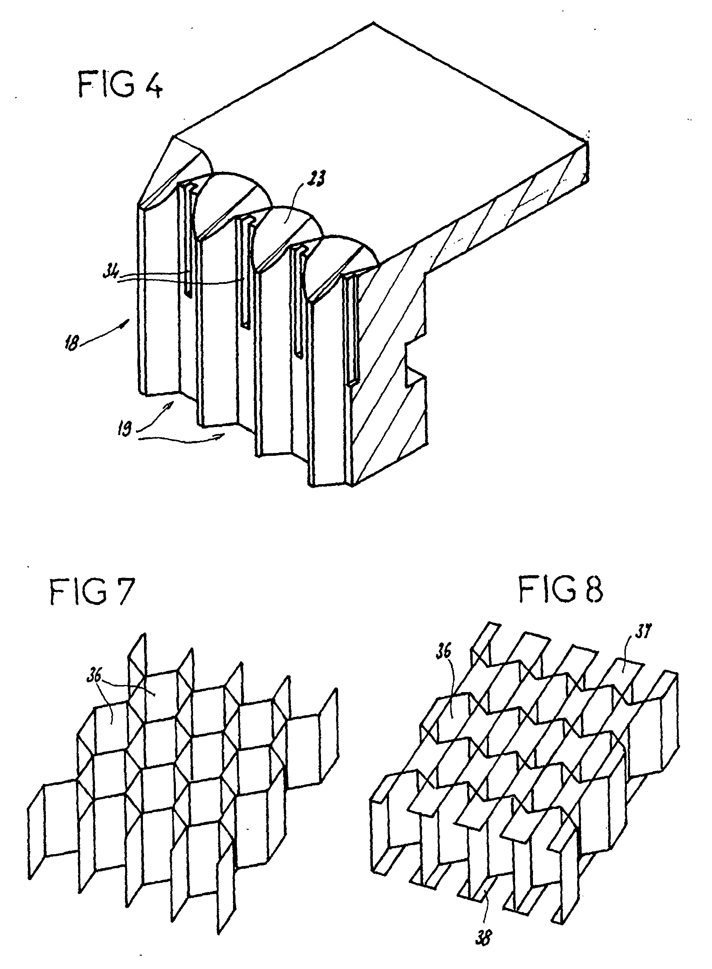

Il est à noter que les surfaces 20 sont convergentes depuis la sortie de la filière en direction de la chambre de conformation et de refroidissement 4, dont les parois inférieure et supérieure sont constituées par les surfaces 22 des deux ensembles de sortie 18. Dans la mesure où une feuille possède une hauteur en sortie d'une fente 16, par exemple de 32 mm, les surfaces 22 sont écartées de 30 mm. Le passage de 32 mm à 30 mm se fait par l'intermédiaire des surfaces inclinées 20. Cela permet de bénéficier d'un excellent contact entre les bords longitudinaux des feuilles en sortie de filière et les parois supérieure et inférieure de la chambre 22, assurant une parfaite étanchéité entre les compartiments définis par les différentes feuilles. Cette configuration permet l'obtention d'une structure alvéolaire simple, comme montrée à la figure 7.

Dans la forme d'exécution représentée à la figure 4, la surface 20 inclinée de chaque élément 18 présente une surface concave 23 en regard de la fente 16 assurant la formation de chaque feuille. Il est ainsi possible de produire des feuilles d'une hauteur sensiblement plus importante que l'écartement entre les deux surfaces 22, provoquant un repliement des bords supérieur et inférieur contre les surfaces 22. Dans les parties coniques 17, situées de chaque côté d'une feuille sortant d'une fente 16, sont ménagées des rainures 24 longitudinales débouchant en aval. Chaque rainure est reliée par deux conduits 25 ou 26 à un collecteur respectivement 27 ou 28. Si une rainure est reliée par un conduit 25 à un collecteur 27, chaque rainure voisine est reliée par un conduit 26 à un collecteur 28. Chaque collecteur 27, 28 peut successivement être relié par l'intermédiaire d'un distributeur 29 à une pompe à dépression 30 et à une pompe 32 d'alimentation en fluide de refroidissement, ce fluide étant constitué par l'eau 6 du bac 5, qui subit une thermorégulation par l'intermédiaire d'un dispositif 33. Il est donc possible, suivant la position du distributeur, et pour une rainure 24 donnée, soit de relier celle-ci à la pompe à dépression 30, et ainsi de créer une dépression entre les deux feuilles délimitant le compartiment dans lequel débouche cette rainure 24, soit de réaliser l'alimentation en fluide de refroidissement de cette rainure 24 à partir du bac 5, par l'intermédiaire de la pompe 32.

La valeur de la pression d'alimentation en fluide de refroidissement correspond sensiblement à la valeur des pertes de charge dans les conduits d'alimentation et peut être de l'ordre de 1 bar (1 bar = 10⁵ Pa). La valeur de la dépression doit être la plus élevée possible en fonction des conditions d'utilisation de l'installation-altitude, température... sans toutefois atteindre la limite de tension de surface du fluide de refroidissement. Cette dépression peut être de l'ordre de 0,6 bar.

Les figures 5 et 6 représentent, à titre d'exemple, un distributeur à six voies dans deux positions.

Dans la position représentée à la figure 5, les collecteurs 28 sont reliés à la source de dépression 30, et les collecteurs 27 sont reliés à la pompe 32 et alimentés en fluide de refroidissement. A la figure 6, il s'agit de l'inverse.

Afin de limiter les pertes de charge, des rainures 34 sont ménagées dans l'ensemble de sortie 18, qui viennent coopérer avec les rainures 24 de la pièce principale de la filière, pour former des canaux de grande section permettant successivement la mise en dépression et l'introduction de fluide de refroidissement dans les compartiments délimités par les feuilles.

En pratique, la dépression exercée dans un compartiment entre deux feuilles provoque le rapprochement des deux feuilles, ainsi que leur soudage, le fluide de refroidissement constitué par de l'eau assurant le refroidissement de la matière sur une face de chaque feuille et la solidification de la structure dans la chambre de refroidissement. L'inversion des phénomènes de dépression et d'alimentation en fluide de refroidissement successivement dans les rainures 24 provoque la formation des alvéoles, et l'obtention d'une structure telle que représentée à la figure 7.

La chambre de refroidissement 4 est également délimitée latéralement par deux parois 35, réalisant l'étanchéité au niveau des deux feuilles extrudées les plus extérieures.

La chambre de refroidissement est donc étanche et peut être pressurisée, dans la mesure où l'eau amenée par les rainures 24, ne peut pas s'échapper.

La chambre de conformation et de refroidissement 4 étant pressurisée par l'eau, cette eau contenue dans les alvéoles 36 se dépressurise et alimente le bac 5, à la sortie de la chambre 4. Une fois le procédé en cours de fonctionnement, il est possible de se passer du train de traction 7. En effet, la pression du fluide de refroidissement, distribuée par les collecteurs 27 et 28 selon le cycle, étant inférieure à la pression de la matière thermofusible issue de l'extrudeuse, une force de réaction dans la chambre étanche 4 oblige la structure alvéolaire formée à en sortir et, de ce fait, à assurer la traction au niveau de la sortie de la filière. L'avantage est que cette sortie est saccadée du fait de l'inversion à chaque cycle de formation d'alvéoles de la dépression et de l'alimentation en fluide de refroidissement. Il en résulte que les parties soudées des feuilles sont plus étirées, donc plus fines, que les parties non soudées, ce qui aboutit à un gain de poids de la structure ainsi formée. Il est possible de conjuguer les caractéristiques du train de traction à faible vitesse et de l'alimentation du fluide de refroidissement, supérieure à ce qu'elle devrait être, pour réaliser des alvéoles à forme particulière, telles que des alvéoles bombées ou des alvéoles 37 avec une peau supérieure et une peau inférieure partielles 38, comme montré à la figure 8, une telle configuration étant obtenue avec l'ensemble de sortie représenté à la figure 4. La structure représentée à la figure 8 est une structure à âme alvéolaire et peaux perméables.

L'étanchéité au niveau de la chambre 4 peut être obtenue en réalisant les parois en un matériau à bon coefficient de friction, par exemple en une mousse élastomère.

Le liquide de refroidissement peut être à une température de l'ordre de 30°C, par exemple, pour du polypropylène, ce qui évite un phénomène de trempe de la matière thermofusible à la sortie de la filière, ce qui l'empêcherait de se déformer et de se souder puisqu'elle serait immédiatement figée. Dans le procédé selon l'invention, la face des feuilles du côté dépression, ne trouve pas suffisamment de frigories et se trouve donc soudable par contact et sous l'effet d'un très légère pression contre une autre feuille, en raison de la force exercée par la dépression.

La quantité de frigories apportées par le fluide de refroidissement doit être suffisante pour solidifier définitivement la structure dans la chambre de refroidissement.

En ce qui concerne le dispositif pour la mise en oeuvre du procédé, il est possible de réaliser tant la filière que l'ensemble de sortie et de conformation soit par usinage de pièces massives, soit par juxtaposition d'éléments unitaires.

Comme il ressort de ce qui précède, l'invention apporte une grande amélioration à la technique existante en fournissant un procédé de fabrication de structure alvéolaire, de conception simple, permettant l'obtention d'une structure en continu, dans laquelle les alvéoles sont orientées perpendiculairement à l'axe d'extrusion, ce qui autorise l'obtention de plaques de grandes dimensions, qui sont directement utilisables, après avoir été découpées en sortie, ou qui peuvent être revêtues immédiatement par des feuilles de revêtement formant peaux.

Comme il va de soi, l'invention ne se limite pas au seul mode de mise en oeuvre de ce procédé, ni à la seule forme d'exécution du dispositif, décrits ci-dessus à titre d'exemple non limitatifs. Elle embrasse au contraire toutes les variantes entrant dans le cadre de l'invention défini par les revendications. C'est ainsi notamment que les parties coniques 17, 19, pourraient être remplacées par des parties planes ou en forme de demi-dômes, que le distributeur pourrait être d'un type différent, par exemple rotatif, ou encore que la filière comportant les fentes pourraît être dissociée de la filière porte-manteau.

## Revendications

1. Procédé de fabrication d'une structure alvéolaire en matière thermofusible, consistant à :
- à extruder en continu, à l'aide d'une filière à plusieurs fentes, des feuilles parallèles (31) de matière thermofusible à l'intérieur d'une chambre de refroidissement (4), avec réalisation d'une étanchéité entre les bords longitudinaux des feuilles et les parois de la chambre (1), les différentes feuilles délimitant entre elles et avec les parois de la chambre des compartiments,
- à réaliser, dans cette chambre et à partir de l'extrémité située du côté de la filière, une dépression dans un compartiment sur deux, afin de déformer et d'attirer deux à deux les feuilles extrudées pour réaliser un soudage localisé sur toute leur hauteur,
- à remplir, à partir de l'extrémité située du côté de la filière, un compartiment sur deux, alternés avec les compartiments précédents, à l'aide d'un fluide de refroidissement, et
- à alterner, dans chaque compartiment, la mise en dépression et le remplissage à l'aide d'un fluide de refroidissement, pour obtenir une structure alvéolaire solidifiée dans la chambre de refroidissement dans laquelle les alvéoles sont perpendiculaires à la direction d'extrusion.

2. Procédé selon la revendication 1, **caractérisé en ce que** le fluide de refroidissement est de l'eau dont la température est régulée.

3. Procédé selon l'une quelconque des revendications 1 et 2, **caractérisé en ce qu'**il consiste à mettre en oeuvre une matière thermoplastique.

4. Procédé selon l'une quelconque des revendications 1 à 3, **caractérisé en ce qu'**il consiste à réaliser l'extrusion des feuilles parallèles (31) dans une chambre de refroidissement pressurisée (4) en raison de l'étanchéité réalisée, d'une part, entre les bords longitudinaux des feuilles et les deux parois (22) de la chambre et, d'autre part, entre les deux feuilles extérieures et les deux autres parois (35) de la chambre.

5. Procédé selon l'une quelconque des revendications 1 à 4, **caractérisé en ce qu'**il consiste à former des feuilles (31) dont la hauteur est supérieure à celle de la chambre de refroidissement, de telle sorte que les extrémités des feuilles (31) constituent des retours formant une peau supérieure et une peau inférieure partielles (38) pour la structure alvéolaire (36).

6. Procédé selon l'une quelconque des revendications 1 à 5, **caractérisé en ce qu'**il consiste à exercer sur la structure sortant de la chambre de refroidissement (4) une traction saccadée, afin de diminuer l'épaisseur des feuilles dans les zones de celles-ci devant être soudées les unes sur les autres.

7. Procédé selon l'une quelconque des revendications 1 à 6, **caractérisé en ce qu'**il consiste à exercer momentanément dans chaque. compartiment une dépression de l'ordre de 0,6 bar (1 bar = 10⁵ Pa).

8. Dispositif pour la mise en oeuvre du procédé selon l'une des revendications 1 à 7, comprenant une extrudeuse (2) amenant la matière thermofusible à l'état visqueux à une filière porte-manteau (3) comportant plusieurs fentes (16) parallèles destinées chacune à la formation en continu d'une feuille (31), chaque fente (16) étant délimitée par deux pièces (17) en forme de cônes, réalisées en matériau isolant thermique, et dans chacune desquelles est ménagée une rainure (24) susceptible d'être reliée successivement à une source de dépression (30) et à une source (32) de fluide de refroidissement, ce dispositif comprenant également une chambre de refroidissement (4) tubulaire, de section rectangulaire, de hauteur égale à la hauteur de la structure à obtenir, dans le sens des alvéoles de celle-ci, et de largeur égale à celle de la structure, un réservoir (5) de fluide de refroidissement à partir duquel le fluide est prélevé à l'aide d'une pompe (32), une pompe à dépression (30), et un distributeur (29) qui, associé à ces deux pompes (30, 32) ainsi qu'à un réseau (25, 26, 27, 28) le reliant aux différents compartiments situés des deux côtés des feuilles, est destiné à relier successivement chaque compartiment avec la source de dépression (30) et avec la source (32) de fluide de refroidissement.

9. Dispositif selon la revendication 8, **caractérisé en ce que** chaque pièce (17) en forme de cône, disposée d'un côté d'une fente (16) de la filière, est revêtue d'un matériau caloporteur et/ou équipée de moyens de chauffage.

10. Dispositif selon l'une quelconque des revendications 8 et 9, **caractérisé en ce que** la chambre de refroidissement (4) est au moins partiellement immergée dans un bac de refroidissement (5) contenant de l'eau, dans lequel passe la structure alvéolaire à la sortie de la chambre, l'eau contenue dans le bac (5) constituant le fluide de refroidissement participant à la mise en forme et au refroidissement des feuilles (31) à l'intérieur de la chambre pour former et solidifier les alvéoles (34).

11. Dispositif selon l'une quelconque des revendications 8 à 10, **caractérisé en ce que** la filière (3) est associée à deux ensembles de sortie (18) comportant des parties coniques (19) complémentaires de celles (17) de la filière dans lesquelles débouchent les rainures (24) assurant successivement la mise en dépression et l'alimentation en fluide de refroidissement, les parties coniques (19) des deux ensembles venant s'imbriquer dans celles (17) de la filière, de part et d'autre des fentes de formation des feuilles (31), les deux ensembles délimitant par leurs faces (22) en vis-à-vis les deux faces de la structure alvéolaire perpendiculaire aux alvéoles.

12. Dispositif selon la revendication 11, **caractérisé en ce que** les deux faces (20) en vis-à-vis des deux ensembles de sortie (18) associés à la filière sont convergentes depuis la sortie de la filière en direction de la chambre de refroidissement (4).

13. Dispositif selon la revendication 12, **caractérisé en ce que** les faces (20) en vis-à-vis des deux ensembles de sortie comportent une surface concave (23) en regard de la sortie de chaque feuille.

14. Dispositif selon l'une quelconque des revendications 11 à 13, **caractérisé en ce que** les deux ensembles de sortie (18) sont montés réglables relativement à la filière (3), dans la direction des alvéoles (34), afin de permettre le réglage de l'épaisseur de la structure alvéolaire.

15. Dispositif selon l'une quelconque des revendications 8 à 14, **caractérisé en ce qu'**en aval de la chambre de refroidissement (4) est disposé un dispositif de traction (7) constitué par deux rouleaux (8) entraînés en sens inverse l'un de l'autre et prenant appui sur les deux faces de la structure alvéolaires perpendiculaires aux alvéoles.

16. Dispositif selon l'une quelconque des revendications 8 à 15, **caractérisé en ce qu'**il comporte, en aval de la chambre de refroidissement (4), un dispositif (14) de découpe de la structure alvéolaire, transversalement à la direction d'extrusion, afin de former des plaques.

17. Dispositif selon l'une quelconque des revendications 8 à 16, **caractérisé en ce qu'**il comporte, en aval de la chambre de refroidissement (4), un dispositif (10) de soudage en continu, sur les deux faces de la structure alvéolaire de deux feuilles de revêtement (12) formant peaux.

## Patentansprüche

1. Verfahren zum Herstellen einer wabenförmigen Struktur aus heiß-schmelzendem Material, wobei:
- mit Hilfe einer Matrize mit mehreren Schlitzen kontinuierlich parallele Folien (31) aus heiß-schmelzendem Material im Innern einer Kühlkammer (4) extrudiert werden, wobei zwischen den Längsrändern der Folien und den Wänden der Kammer (1) eine Dichtigkeit erzeugt wird und die unterschiedlichen Folien zwischen ihnen und mit den Wänden der Kammer Abteile begrenzen,
- in dieser Kammer und ausgehend vom matrizenseitigen Ende in jedem zweiten Abteil ein Unterdruck erzeugt wird, um die extrudierten Folien paarweise zu verformen und anzuziehen, um eine lokale Verschweißung über ihre gesamte Höhe zu erzeugen,
- ausgehend vom matrizenseitigen Ende jedes zweite Abteil abwechselnd mit den vorhergehenden Abteilen mittels eines Kühlfluids gefüllt wird, und
- in jedem Abteil die Unterdruckerzeugung und das Füllen mit Hilfe eines Kühlfluids abgewechselt wird, um in der Kühlkammer eine verfestigte wabenförmige Struktur zu erzielen, bei der die Waben senkrecht zur Extrusionsrichtung sind.

2. Verfahren nach Anspruch 1, **dadurch gekennzeichnet, dass** das Kühlfluid Wasser ist, dessen Temperatur reguliert wird.

3. Verfahren nach einem der Ansprüche 1 und 2, **dadurch gekennzeichnet, dass** es ein thermoplastisches Material verwendet.

4. Verfahren nach einem der Ansprüche 1 bis 3, **dadurch gekennzeichnet, dass** es die Extrusion der parallelen Folien (31) in einer druckbeaufschlagten Kühlkammer (4) aufgrund der erzeugten Dichtigkeit durchführt, und zwar einerseits zwischen den Längsrändern der Folien und den beiden Wänden (22) der Kammer und andererseits zwischen den beiden äußeren Folien und den beiden anderen Wänden (35) der Kammer.

5. Verfahren nach einem der Ansprüche 1 bis 4, **dadurch gekennzeichnet, dass** es Folien (31) bildet, deren Höhe größer als die der Kühlkammer ist, so dass die Enden der Folien (31) Umschläge darstellen, die eine partielle obere Haut und eine partielle untere Haut (38) für die wabenförmige Struktur (36) bilden.

6. Verfahren nach einem der Ansprüche 1 bis 5, **dadurch gekennzeichnet, dass** es auf die aus der Kühlkammer (4) austretende Struktur einen ruckartigen Zug ausübt, um die Dicke der Folien in deren Bereichen zu verringern, die miteinander verschweißt werden sollen.

7. Verfahren nach einem der Ansprüche 1 bis 6, **dadurch gekennzeichnet, dass** es für einen Augenblick in jedem Abteil einen Unterdruck von etwa 0,6 bar (1 bar = 10⁵ Pa) erzeugt.

8. Vorrichtung zum Durchführen des Verfahrens nach einem der Ansprüche 1 bis 7 mit einem Extruder (2), der das heißschmelzende Material im viskosen Zustand einer ummantelten Matrize (3) zuführt, die mehrere parallele Schlitze (16) aufweist, die jeweils für die kontinuierliche Bildung einer Folie (31) bestimmt sind, wobei jeder Schlitz (16) von zwei kegelförmigen Stücken (17) begrenzt ist, die aus einem thermischen isolierenden Material bestehen und wobei in jedem von ihnen eine Rille (24) eingearbeitet ist, die nach und nach mit einer Unterdruckquelle (30) und einer Kühlfluidquelle (32) verbunden werden kann, wobei die Vorrichtung außerdem ausgestattet ist mit einer rohrförmigen Kühlkammer (4) mit rechteckförmigem Querschnitt, der gleichen Höhe wie die Höhe der zu erzielenden Struktur in der Richtung ihrer Waben und mit gleicher Breite wie die der Struktur, einem Kühlfluid-Speicher (5) von dem aus das Fluid mit Hilfe einer Pumpe (32) entnommen wird, einer Unterdruckpumpe (30) sowie einem Verteiler (29), der in Verbindung mit den beiden Pumpen (30, 32) sowie mit einem Leitungsnetz (25, 26, 27, 28), die ihn mit den beiderseits der Folien angeordneten Abteilen verbinden, dazu bestimmt ist, jedes Abteil nach und nach mit der Unterdruckquelle (30) und der Kühlfluidquelle (32) zu verbinden.

9. Vorrichtung nach Anspruch 8, **dadurch gekennzeichnet, dass** jedes auf einer Seite eines Schlitzes (16) der Matrize angeordnete kegelförmige Stück (17) mit einem Wärmeträgermaterial überzogen und/oder mit Heizmitteln ausgestattet ist.

10. Vorrichtung nach einem der Ansprüche 8 und 9, **dadurch gekennzeichnet, dass** die Kühlkammer (4) mindestens teilweise in einen Wasser enthaltenden Kühltrog (5) eingetaucht ist, in dem die wabenförmige Struktur beim Austritt aus der Kammer hindurchtritt, wobei das in dem Trog (5) enthaltene Wasser das Kühlfluid bildet, das bei der Formgebung und dem Kühlen der Folien (31) im Innern der Kammer teilnimmt, um die Waben (34) zu formen und zu verfestigen.

11. Vorrichtung nach einem der Ansprüche 8 bis 10, **dadurch gekennzeichnet, dass** die Matrize (3) zwei Austrittseinheiten (18) zugeordnet ist, welche konische Teile (19) aufweisen, die zu denjenigen (17) der Matrize komplementär sind, in welche die Rillen (24) münden, die nach und nach die Unterdruckerzeugung und die Zufuhr von Kühlfluid gewährleisten, wobei die konischen Teile (19) der beiden Einheiten in diejenigen (17) der Matrize beiderseits der Schlitze zur Bildung der Folien (31) eingreifen, wobei die beiden Einheiten über ihre gegenüberliegenden Flächen (22) die beiden Flächen der wabenförmigen Struktur senkrecht zu den Waben begrenzen.

12. Vorrichtung nach Anspruch 11, **dadurch gekennzeichnet, dass** die beiden gegenüberliegenden Flächen (20) der beiden der Matrize zugeordneten Austrittseinheiten (18) vom Austritt der Matrize in der Richtung der Kühlkammer (4) konvergierend sind.

13. Vorrichtung nach Anspruch 12, **dadurch gekennzeichnet, dass** die gegenüberliegenden Flächen (20) der beiden Austrittseinheiten eine konkave Oberfläche (23) gegenüber vom Austritt jeder Folie aufweisen.

14. Vorrichtung nach einem der Ansprüche 11 bis 13, **dadurch gekennzeichnet, dass** die beiden Austrittseinheiten (18) relativ zu der Matrize (3) in der Richtung der Waben (34) einstellbar montiert sind, um die Einstellung der Dicke der Wabenstruktur zu ermöglichen.

15. Vorrichtung nach einem der Ansprüche 8 bis 14, **dadurch gekennzeichnet, dass** stromab von der Kühlkammer (4) eine Zugvorrichtung (7) angeordnet ist, die aus zwei Rollen (8) besteht, die gegensinnig zueinander angetrieben sind und auf den beiden senkrecht zu den Waben verlaufenden Flächen der wabenförmigen Struktur aufliegen.

16. Vorrichtung nach einem der Ansprüche 8 bis 15, **dadurch gekennzeichnet, dass** sie stromab von der Kühlkammer (4) eine Vorrichtung (14) zum Schneiden der wabenförmigen Struktur in Querrichtung zur Extrusionsrichtung aufweist, um Platten zu bilden.

17. Vorrichtung nach einem der Ansprüche 8 bis 16, **dadurch gekennzeichnet, dass** sie stromab von der Kühlkammer (4) eine Vorrichtung (10) zum kontinuierlichen Schweißen auf den beiden Flächen der wabenförmigen Struktur aus zwei hautbildenden Überzugsfolien (12) aufweist.

## Claims

1. Method for production of an alveolar structure made of heat-fusible material, consisting of:
- extruding continuously, by means of a die with a plurality of slots, parallel sheets (31) of heat-fusible material inside a cooling chamber (4), with creation of a seal between the longitudinal edges of the sheets and the walls of the chamber (1), the different sheets delimiting compartments between one another and with the walls of the chamber;
- creating, in this chamber and starting from the end which is situated on the die side, low pressure in one compartment out of two, so as to deform the extruded sheets and draw them towards one another in pairs in order to carry out localised welding along their entire height;
- filling, starting from the end which is situated on the die side, one compartment out of two, alternating with the preceding compartments, by means of a cooling fluid; and
- alternating, in each compartment, the creation of low pressure and filling by means of a cooling fluid, in order to obtain a solidified alveolar structure in the cooling chamber wherein the alveoles are perpendicular to the direction of extrusion.

2. Method according to claim 1, **characterised in that** the cooling fluid is water, the temperature of which is regulated.

3. Method according to either one of claims 1 and 2, **characterised in that** it consists of using a thermoplastic material.

4. Method according to any one of claims 1 to 3, **characterised in that** it consists of carrying out the extrusion of the parallel sheets (31) in a cooling chamber (4) which is pressurised owing to the seal provided firstly between the longitudinal edges of the sheets and the two walls (22) of the chamber, and secondly between the two outer sheets and the two other walls (35) of the chamber.

5. Method according to any one of claims 1 to 4, **characterised in that** it consists of forming sheets (31), the height of which is greater than that of the cooling chamber, such that the ends of the sheets (31) constitute returns which form a partial upper skin and a partial lower skin (38) for the alveolar structure (36).

6. Method according to any one of claims 1 to 5, **characterised in that** it consists of applying intermittent traction to the structure which is discharged from the cooling chamber (4), in order to decrease the thickness of the sheets in the areas of the latter which must be welded to one another.

7. Method according to any one of claims 1 to 6, **characterised in that in that** it consists of applying temporarily in each compartment low pressure of approximately 0.6 bar (1 bar = 10⁵Pa).

8. Device for implementation of the method according to any one of claims 1 to 7, comprising an extruder (2) which conducts the heat-fusible substance in the viscous state to a "davit" die comprising a plurality of parallel slots (16), each of which is designed for continuous formation of a sheet (31), each slot (16) being delimited by two parts (17) in the form of cones made of thermal insulating material, and in each of which there is provided a groove (24) which can be connected in succession to a source (30) of low pressure (30) and to a source (32) of cooling fluid, this device also comprising a tubular cooling chamber (4) with a rectangular cross-section, with a height equal to the height of the structure to be obtained, in the direction of the alveoles of the latter, and with a width equal to that of the structure, a tank (5) for cooling fluid from which the fluid is collected by means of a pump (32), a low-pressure pump (30), and a distributor (29), which, being associated with these two pumps (30,32) and with a network (25,26,27,28) which connects it to the different compartments situated on both sides of the sheets, is designed to connect each compartment in succession to the source of low pressure (30) and to the source (32) of cooling fluid.

9. Device according to claim 8, **characterised in that** each part (17) in the form of a cone, disposed on one side of a slot (16) of the die, is covered with a heat-exchanging material and/or is equipped with means for heating.

10. Device according to either one of claims 8 and 9, **characterised in that** the cooling chamber (4) is at least partially immersed in a cooling tank (5) which contains water, into which the alveolar structure passes at the output of the chamber, the water contained in the tank (5) constituting the cooling fluid which participates in forming and cooling the sheets (31) inside the chamber in order to form and solidify the alveoles (34).

11. Device according to any one of claims 8 to 10, **characterised in that** the die (3) is associated with two output assemblies (18) comprising conical parts (19) which are complementary to those (17) of the die into which there open the grooves (24) which assure in succession the creation of depression and supply of cooling fluid, the conical parts (19) of the two assemblies being imbricated in those (17) of the die, on both sides of the slots for formation of the sheets (31), the two assemblies delimiting by means of their opposite surfaces (22)the two surfaces of the alveolar structure which is perpendicular to the alveoles.

12. Device according to claim 11, **characterised in that** the two opposite surfaces (20) of the two output assemblies (18) which are associated with the die converge from the output of the die in the direction of the cooling chamber (4).

13. Device according to claim 12, **characterised in that** the opposite surfaces (20) of the two output assemblies comprise a concave surface (23) opposite the output of each sheet.

14. Device according to any one of claims 11 to 13, **characterised in that** the two output assemblies (18) are fitted such that they can be adjusted relative to the die (3), in the direction of the alveoles (34), in order to permit adjustment of the thickness of the alveolar structure.

15. Device according to any one of claims 8 to 14, **characterised in that** downstream from the cooling chamber (4) there is disposed a traction device (7) which consists of two rollers (8) which are driven in opposite directions from one another, and are supported on the two surfaces of the alveolar structure which are perpendicular to the alveoles.

16. Device according to any one of claims 8 to 15, **characterised in that** downstream from the cooling chamber (4) it comprises a device (14) for cutting the alveolar structure, transversely to the direction of extrusion, in order to form sheeting.

17. Device according to any one of claims 8 to 16, **characterised in that** downstream from the cooling chamber (4) it comprises a device (10) for continuous welding, on the two surfaces of the alveolar structure of two covering sheets (12) which form skins.
